# EUROPEAN PATENT APPLICATION

(11) **EP 4 369 270 A1**
(43) Date of publication of application: **15.05.2024**
(21) Application number: 22315263.8
(22) Date of filing: 08.11.2022
(51) Int. Cl.: G06Q 20/32, G06Q 20/40, H04W 12/06

(54) **METHOD FOR AUTHENTICATING A USER OF A PAYMENT INSTRUMENT DURING A FACE-TO-FACE PAYMENT TRANSACTION**

(71) Applicant: THALES DIS FRANCE SAS, 92190 Meudon (FR)
(72) Inventor: Lemaire, François, 75015 PARIS (FR)
(74) Representative: Grevin, Emmanuel

(57) **Abstract**

The invention is a method for authenticating a user of a payment instrument (10) during a proximity payment transaction between the instrument and a terminal (20). During the payment transaction, an entity consisting of the payment instrument and the terminal performs a selection procedure leading to a selection of an out-of-band method for authenticating the user. Responsive to the method selection, the terminal sends to an authentication system (30) an authentication request for user authentication through the out-of-band method. Upon receipt of the authentication request, the authentication system attempts to authenticate the user by exchanging data with a mobile apparatus (40) of the user. The authentication system generates an authentication code (31) reflecting a result of the user authentication attempt and sends the authentication code to the terminal that uses the authentication code for requesting either a payment authorization or a payment initiation to complete the payment transaction.

## Description

### (Field of the invention)

The present invention relates to methods for authenticating the user of a payment instrument during a face-to-face payment transaction. It relates particularly to methods of authenticating the person carrying a payment instrument that is involved in an in-person payment transaction between the payment instrument and a payment terminal.

### (Background of the invention)

Financial transactions or electronic funds transfers are done today through the interaction of a payment instrument with a connected payment terminal, and the exchange of a payload with a remote server. For example, the financial transaction may be a payment carried out via a Point-Of-Sale (POS) terminal or a cash withdrawal via an Automated Teller Machine (ATM). Such transactions are called in-person transactions (or proximity transactions or face-to-face transactions) because the cardholder is at the same location as the payment terminal.

Conventional payment terminal's are devices designed to interface with payment instruments to make electronic funds transfers. Conventional payment terminals are considered as secure devices because some of their essential hardware components and their software/firmware components passed security tests. In particular, the PIN pad is tamper resistant and embeds cryptographic keys to cipher the PIN entry. The Payment Card Industry - PIN Transaction Security (PCI PTS) certification brings a high security level guarantee to conventional payment terminals.

A problem arises with the new generation of POS terminals, called SoftPOS (or Software POS), which leverages Commercial Off-The-Shelf (COTS) mobile devices. A SoftPOS comprises a POS terminal- software application able to accept payments, which runs on a standard NFC mobile phone that could be owned by the merchant which can be a taxi driver, a plumber, a street vendor, a clothing store, a supermarket for instance. Payment Card Industry - PIN Transaction Security (PCI PTS) standard cannot apply on such devices, considering their commercial off-the-shelf nature. It becomes consequently possible to cheat a customer with a fake POS terminal application loaded by a fraudulent merchant on their mobile phone, and to capture the PIN or any other personal cardholder information or financial data during a fake payment transaction.

### (Summary of the Invention)

There is a need to improve security of the way to authenticate a user of a payment instrument during a face-to-face financial transaction with a SoftPOS terminal.

The invention aims at solving the above-mentioned technical problem.

An object of the present invention is a method for authenticating a user of a payment instrument during a face-to-face payment transaction between the payment instrument and a payment terminal. During the payment transaction, an entity consisting of the payment instrument and the payment terminal performs a selection procedure which leads to a selection of an out-of-band method for authenticating the user. Responsive to the selection of the out-of-band method, the payment terminal sends to a remote authentication system an authentication request for user authentication through said out-of-band method. Upon receipt of the authentication request, the authentication system attempts to authenticate the user by exchanging data with a mobile apparatus of the user previously registered with the authentication system. The authentication system generates an authentication code reflecting a result of the user authentication attempt and sends said authentication code to the payment terminal. The payment terminal uses the authentication code for requesting either a payment authorization or a payment initiation to complete the payment transaction.

Advantageously, the payment instrument may comprise a list of Cardholder Verification Methods including said out-of-band method, the payment terminal may support a number of Cardholder Verification Methods including said out-of-band method, and said selection procedure may be the conventional selection mechanism as defined by EMV^{®} contact and contactless specifications and may be finalized by the payment terminal.

Advantageously, the payment terminal may store a terminal parameter reflecting capabilities of the payment terminal, during the payment transaction, the payment instrument may receive from the payment terminal said terminal parameter, the payment instrument may comprise a selection rule specifying that the out-of-band method must be selected if the payment terminal supports said out-of-band method, the selection procedure may be finalized by the payment instrument which takes the unilateral decision to select the out-of-band method for authenticating the user, and the payment instrument may send to the payment terminal a message requiring an authentication of the user by the out-of-band method.

Advantageously, the payment instrument may have been issued by an issuer authority, said selection procedure may comprise a first phase which leads to the selection of a first method for authenticating the user, and said selection procedure may comprise a second phase subsequent to the first phase in which the payment terminal sends a request to a directory server to find out if the issuer authority supports the out-of-band method, and in the event of a positive response received from the directory server, the payment terminal may make the unilateral decision to override said first method and to select the out-of-band method for authenticating the user.

Advantageously, the payment transaction may apply for a transaction amount, said first method may be a Consumer device Cardholder Verification method (CD-CVM) actually applied to the user during the first phase, during said second phase the payment terminal may compare the transaction amount to a preset threshold and if the transaction amount exceeds the preset threshold the payment terminal may send the request to the directory server to find out if the issuer authority supports the out-of-band method, and in the event of a positive response received from the directory server, the payment terminal may make the unilateral decision to override said first method and to select the out-of-band method for authenticating the user.

Advantageously, during the payment transaction, the payment terminal may retrieve an input data from the user via an input interface of the payment terminal, said input data reflecting a choice of the user to authenticate the user by the out-of-band method and the selection procedure may be finalized by the payment terminal which may make the decision to select the out-of-band method for authenticating the user based on said input data.

Advantageously, the out-of-band method may require execution of a PIN verification, said authentication system may require the user to enter a PIN code associated to the payment instrument via a user interface of the mobile apparatus, the mobile apparatus may send the entered PIN code to the authentication system, the authentication system may perform a check of the received PIN code with a reference PIN code associated with the payment instrument and stored by an issuer authority and the authentication system may generate the authentication code reflecting a result of the check of the PIN code.

Advantageously, the payment terminal may send to an acquirer processor a payment authorization request comprising the authentication code and a terminal parameter reflecting capabilities of the payment terminal, the acquirer processor may generate an authorization response denying the payment transaction if the terminal parameter indicates that the payment terminal is of a specific type and the received authentication code is invalid or missing, then send the authorization response to the payment terminal. The acquirer processor may forward the payment authorization request to a payment scheme network if the acquirer processor does not deny the payment transaction.

Advantageously, an acquirer processor may send to a payment scheme network a message comprising a payment authorization request comprising the authentication code and a terminal parameter reflecting capabilities of the payment terminal, the payment scheme network may generate an authorization response by checking if the payment transaction is authorized to continue by using the authentication code, the payment scheme network may generate an authorization response denying the transaction payment if the terminal parameter indicates that the payment terminal is of a specific type and the authentication code is invalid or missing, and the payment scheme network may send the authorization response to the acquirer processor which may forward the authorization response to the payment terminal.

Advantageously, a payment scheme network may send to an issuer processor, working on behalf of an issuer authority that issued the payment instrument of the user, a message comprising a payment authorization request comprising the authentication code and a terminal parameter reflecting capabilities of the payment terminal, the issuer processor may generate an authorization response by checking if the payment transaction is authorized by using the authentication code, said issuer processor may generate an authorization response denying the transaction payment if the terminal parameter indicates that the payment terminal is of a specific type and the authentication code is invalid or missing, and the issuer processor may send the authorization response to the payment terminal via successively the payment scheme network then the acquirer processor.

Advantageously, the payment terminal may send to a Payment Initiation Service Provider a payment initiation request comprising the authentication code and a terminal parameter reflecting capabilities of the payment terminal, the Payment Initiation Service Provider may execute checks based on the received authentication code and terminal parameter, if the Payment Initiation Service Provider accepts the authentication for the transaction amount, the Payment Initiation Service Provider may send a credit transfer request to the issuer authority, which in turn may send a bank transfer order to the merchant bank to transfer the relevant amount from the customer account to the merchant account. Optionally, the Payment Initiation Service Provider may send a notification of money transfer to the payment terminal.

Advantageously, the authentication system may be compliant with the EMV^{®} 3-D Secure specifications.

Another object of the invention is a payment system comprising a payment terminal, a remote authentication system, a mobile apparatus, a directory server and a payment instrument assigned to a user. The payment instrument is able to contribute to a face-to-face payment transaction with the payment terminal. During the payment transaction, an entity consisting of the payment instrument and the payment terminal is configured to perform a selection procedure that leads to a selection of an out-of-band method for authenticating the user. Responsive to the selection of the out-of-band method, the payment terminal is configured to send to the remote authentication system an authentication request for user authentication through said out-of-band method. Upon receipt of the authentication request, the authentication system is configured to attempt to authenticate the user by exchanging data with a mobile apparatus of the user previously registered with the authentication system. The authentication system is configured to generate an authentication code reflecting a result of the user authentication attempt and to send said,authentication code to the payment terminal and the payment terminal is configured to use the authentication code for requesting either a payment authorization or a payment initiation to complete the payment transaction.

Advantageously, the payment instrument may comprise a list of Cardholder Verification Methods including said out-of-band method, the payment terminal may support a number of Cardholder Verification Methods including said out-of-band method, the selection procedure may be the conventional selection mechanism as defined by EMV^{®} contact and contactless specifications and the payment terminal may be configured to finalize the selection procedure.

### (Brief description of the drawings)

Other characteristics and advantages of the present invention will emerge more clearly from reading the following description of a number of preferred embodiments of the invention with reference to the corresponding accompanying drawings in which:
- Figure 1 shows an exemplary flow diagram for authenticating a user of a payment instrument during a face-to-face payment transaction according to a first example of the invention;
- Figure 2 shows an exemplary flow diagram for authenticating a user of a payment instrument during a face-to-face payment transaction according to a second example of the invention;
- Figure 3 shows a diagram of architecture of a system for managing authentication of a user of a payment instrument during a face-to-face payment transaction according to an example of the invention;
- Figure 4 shows an exemplary flow diagram for authenticating a user of a payment instrument during a face-to-face payment transaction according to a third example of the invention;
- Figure 5 shows an exemplary flow diagram for authenticating a user of a payment instrument during a face-to-face payment transaction according to a fourth example of the invention;
- Figure 6 shows a partial exemplary flow diagram based on the EMV^{®} 3-D Secure mechanism for authenticating a user of a payment instrument during a face-to-face payment transaction according to a fifth example of the invention; and
- Figure 7 shows an exemplary flow diagram for authenticating a user of a payment instrument during a face-to-face credit-transfer-based payment transaction.

### (Detailed description of the preferred embodiments)

The invention may apply to any type of payment instrument usually associated to a user (i.e. cardholder). The payment instrument may be a physical smart card, a smartwatch, a wearable device or a digital bank card hosted in a mobile phone for instance.

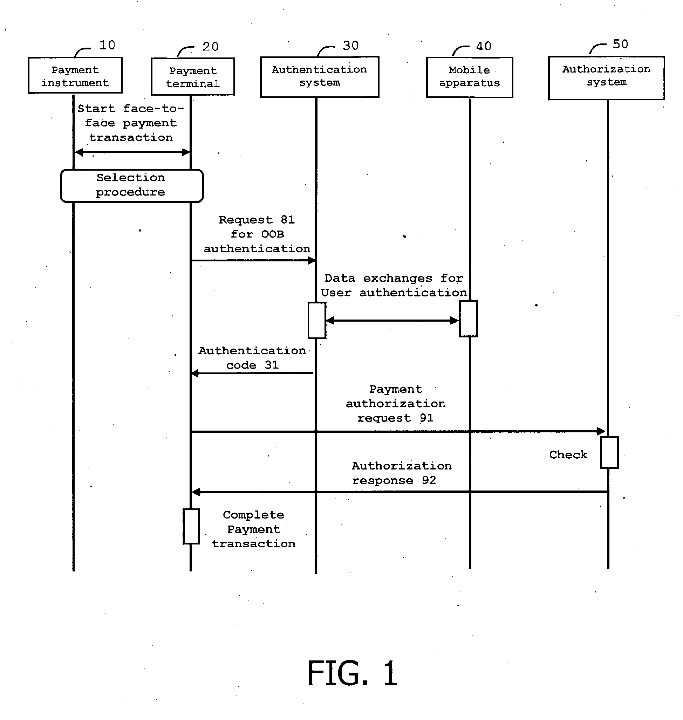

Figure 1 shows an exemplary flow diagram for authenticating a user of a payment instrument during a face-to-face payment transaction according to a first example of the invention.

In this example, the payment instrument 10 is a physical banking card intended to be used by its associated genuine user (i.e. bank customer) for payment transaction or cash withdrawal.

The payment instrument 10 embeds a secure element comprising a hardware processing unit, a memory storing an operating system and a banking application designed to contribute to payment services. The payment instrument 10 may be configured to communicate through a contact or contactless communication protocol. Preferably, the payment instrument 10 is a proximity card able to communicate, through a contactless protocol as defined by the ISO 14443 standard.

Let's assume that the user of the payment instrument wants to perform a face-to-face payment transaction with a payment terminal 20. In other words, the payment instrument and the payment terminal are placed close to each other. The user may tap the payment instrument with the payment terminal to allow the payment instrument to contribute to the payment transaction.

Then, during the payment transaction, an entity consisting of the payment instrument and the payment terminal performs a selection procedure that leads to the selection of an out-of-band (OOB) method for authenticating the user. Since the OOB method may replace typing of a secret data (like a PIN code for instance) on the payment terminal, the payment terminal has no access to the plain value of the secret data provided by the user during the user authentication.

Responsive to the selection of the out-of-band method, the payment terminal sends to a remote authentication system 30 an authentication request 81 for requesting user authentication through the selected out-of-band method.

Upon receipt of the authentication request 81, the authentication system attempts to authenticate the user by exchanging data with a mobile apparatus 40 of the user. The mobile apparatus 40 has been registered with the authentication system during a previous enrollment phase. The enrollment phase may be performed by storing a unique identifier of the mobile apparatus like its serial number, its International Mobile Equipment Identity (IMEI) or a cell number associated with the mobile apparatus.

The mobile apparatus 40 is supposed to, be assigned to the user. Generally, the mobile apparatus 40 belongs to the user.

In some embodiments, two or more mobile apparatus may be assigned to the user and the authentication system may send an authentication request to all mobile apparatus registered for the user.

It is to be noted that the out-of-band method involves the participation of the mobile apparatus 40 to obtain the consent of the user to perform the payment transaction.

The mobile apparatus 40 may be a mobile phone, a Personal Digital Assistant (PDA), a portable personal computer, or a wearable device like a connected watch, a connected ring or a pair of connected glasses for instance.

Then the authentication system generates an authentication code 31 that reflects a result of the user authentication attempt and sends the authentication code 31 to the payment terminal. Exchanges between the payment terminal and the authentication system may be conveyed through a combination of conventional networks (like Telecom networks, private wired networks and the Internet for instance) and protocols.

Then the payment terminal 20 uses the received authentication code 31 for requesting an authorization to complete the payment transaction. For instance, the payment terminal 20 may send a payment authorization request 91 (comprising the authentication code 31) to an authorization system 50. The authorization system 50 may perform one or more checks taking into account the received authentication code 31 (and possibly other items provided by the payment terminal) and send back to the payment terminal 20 an authorization response 92 reflecting the result of the check(s). Upon receipt of the authorization response 92, the payment terminal 20 may complete or abort the payment transaction according to the content of the received authorization response 92.

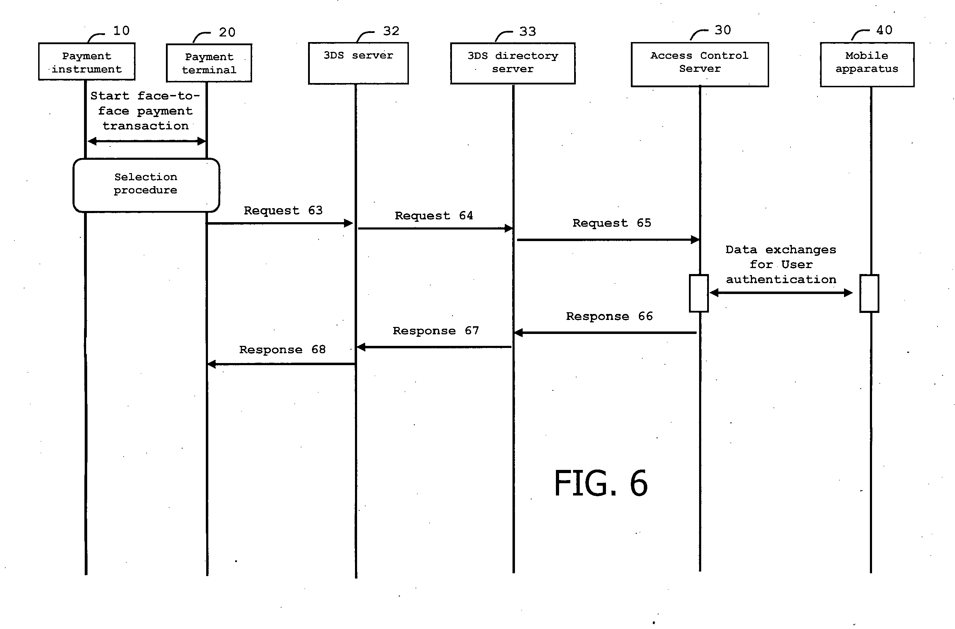

As shown at Figure 6, in a preferred embodiment, the authentication system 30 (also called access control server) may implement the EMV^{®} 3-D Secure (3DS) specifications. The payment terminal 20 may reach the access control server 30 through successively a 3DS server 32 and a 3DS directory server 33 as per 3DS specifications.

In some embodiments, the payment terminal may send an authentication request 63 to the 3DS server 32 that in turn sends a request 64 to the 3DS directory server 33 that sends a request 65 to the access control server 30 to request authentication of the user using the 3DS flow. The access control server 30 may then send to the mobile apparatus 40 a request to authenticate the user. Upon receipt of the request, the mobile apparatus 40 may prompt the user to enter a secret code, a passphrase or an applicative PIN code (specifically assigned to a bank software application hosted on a mobile phone) via a user interface of the mobile apparatus 40 and forward the entered secret code/passphrase/applicative PIN to the access control server 30. Then the access control server 30 may check the validity of the received secret code/passphrase and generate an authentication code 31 reflecting the result of the validity check. Then the access control server 30 may send the generated authentication code 31 to the payment terminal 20 via the 3DS directory server 33 and the 3DS server 32, as per 3DS specifications.

In some embodiments, the access control server 30 may send the generated authentication code 31 to the 3DS directory server 33 through a response 66. In turn, the 3DS directory server 33 may forward the authentication code 31 to the 3DS server 32 via a response 67. Then the 3DS server 32 may send the authentication code 31 to the payment terminal 20 via a response 68. In other words, the sending of the authentication request 81 of Figure 1 may be done via a sequence of requests 63, 64 and 65, while the sequence of responses 66, 67 and 68 allows sending the authentication code 31 from the access control server 30 to the payment terminal 20.

In some embodiments, the mobile apparatus 40 may authenticate the user via the capture of a biometric data or a pattern drawn on a touch screen of the mobile apparatus 40.

In some embodiments, the authentication code 31 may be (or comprise) the authentication value (AV) as defined by EMV^{®} 3-D Secure specifications.

In some embodiments, the mobile apparatus 40 may be (or host) the payment instrument 10. For instance, the mobile apparatus 40 may embed a payment wallet embedding a digital payment card.

In some embodiments, the payment terminal 20 may send a preliminary authorization request to the authorization system 50 and receive a preliminary authorization response that declines the payment transaction because the number of previous transactions without user authentication has reached a specific limit or because the cumulative amount of previous transactions without user authentication has reached a specific threshold for instance. This case may occur for a low amount payment transaction for instance. Upon receipt of the negative preliminary authorization response, the payment terminal 20 may start the selection procedure as described at Figure 1, which may end up into the selection of the out-of-band method.

In some embodiments, the out-of-band method may be managed as a new method declared as Cardholder Verification Methods (CVM) managed by a conventional selection mechanism as defined by EMV^{®} contact and contactless specifications. In other words, the out-of-band method may be acknowledged as a Cardholder Verification Method in the EMV^{®} contact and contactless specifications.

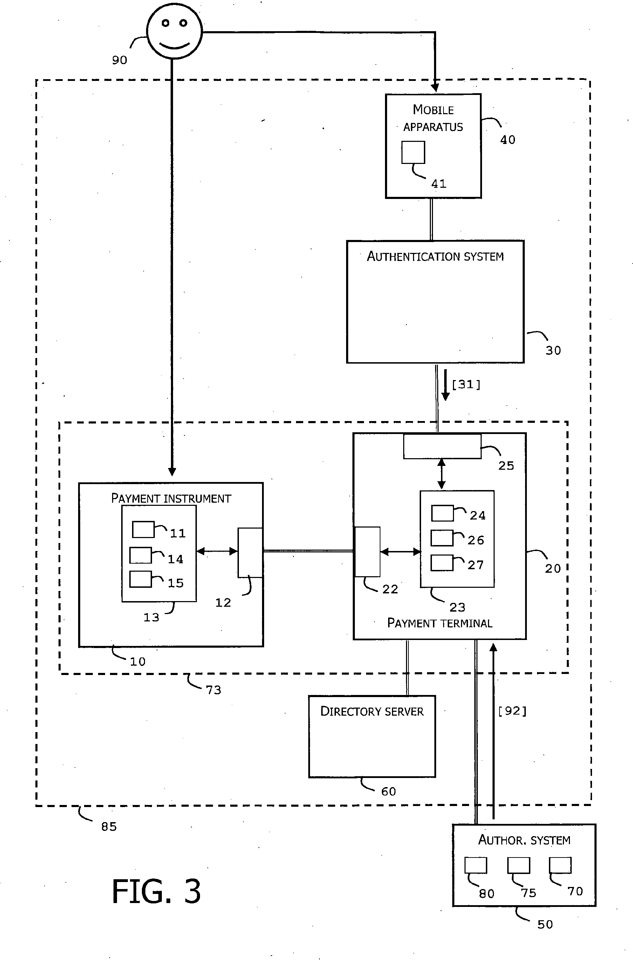

For example, as shown at Figure 3, the payment instrument may comprise a list 14 of Cardholder Verification Methods that includes the out-of-band method. The issuer authority, which provided the payment instrument to the user, may have set the content of the list 14.

The payment terminal may support a number of Cardholder Verification Methods including the out-of-band method. The payment terminal 20 may finalize the selection procedure by executing the conventional selection mechanism defined by EMV^{®} contact and contactless specifications.

Preferably, the payment terminal may support only two methods: "No CVM Required" and the out-of-band method which is set with the highest priority parameter such that the out-of-band method is automatically selected by the usual EMV^{®} selection mechanism.

Whenever the out-of-band method appears in the CVM list 14 of the payment instrument and is amongst the CVMs supported by the payment terminal, it is possible to assume that usage of the out-of-band method is supported by both the acquirer authority (i.e. the bank of the merchant) and the issuer authority (i.e. the bank of the user).

In some embodiments, the payment instrument 10 may be set to enforce the use of the out-of-band method according to a characteristic of the payment terminal.

For example, as shown at Figure 3, the payment terminal may have a memory 23 storing a terminal parameter 27 that reflects capabilities of the payment terminal. During the payment transaction, the payment instrument may receive the terminal parameter 27 sent by the payment terminal. The payment instrument may comprise a selection rule 11 specifying that the out-of-band method must be selected if the payment terminal has specific characteristic such as being a SoftPOS and supports the out-of-band method. The selection procedure may be finalized by the payment instrument that takes the unilateral decision to select the out-of-band method for authenticating the user. The payment instrument may send to the payment terminal a message that requires (enforces) that the user be authenticated using the out-of-band method.

In some embodiments, the payment terminal may override the result of a previous conventional authentication method selection (as defined by EMV^{®} contact and contactless specifications or other standard) if the payment terminal knows that the issuer authority supports the OOB method.

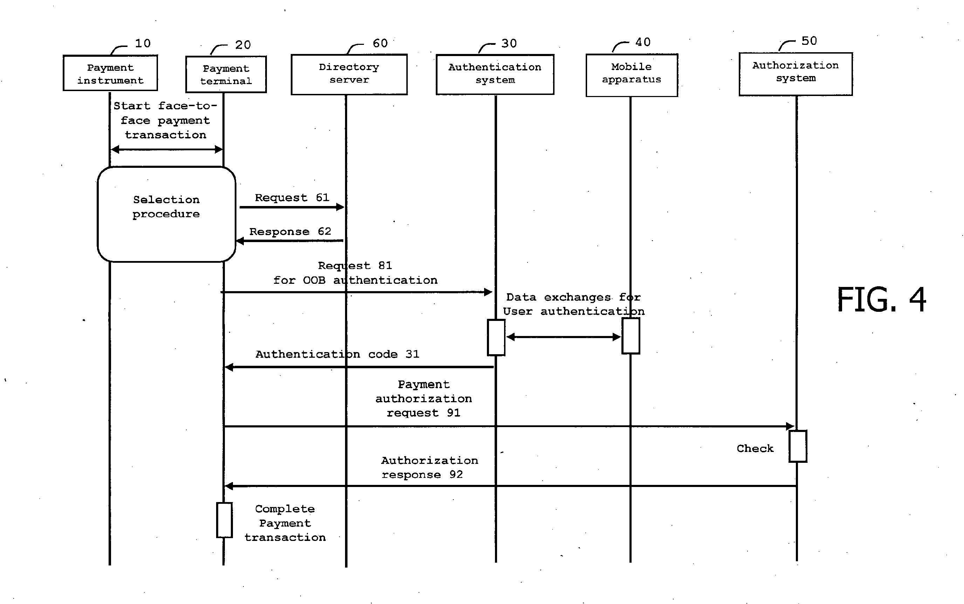

For example, an issuer authority may have issued the payment instrument 10 and the selection procedure may comprise two phases. The first phase may lead to the selection of a first method for authenticating the user. The first phase may be done by performing a conventional selection as defined by EMV^{®} contact and contactless specifications or by any other relevant selection mechanism. The second phase is executed after the first phase. During the second phase, the payment terminal may send a request 61 to a directory server 60 to find out if the issuer authority supports the out-of-band method as shown at Figure 4. In the event of a positive response 62 received from the directory server, the payment terminal may make the unilateral decision to override the first method (selected during the first phase) and to select the out-of-band method for authenticating the user.

In some embodiments, the directory server 60 may be compliant with the EMV^{®} 3-D Secure specifications.

In some embodiments, the request 61 may comprise at least a part of the payment instrument identifier retrieved by the payment terminal. For instance, the payment terminal may extract the Bank Identification Number (BIN) from the Primary Account Number (PAN) read in the payment instrument before or during the selection procedure. The BIN is the initial set of six to eight digits of the PAN and usually corresponds to a bank identifier. The payment terminal 20 may generate a request 61 comprising the BIN retrieved from the payment instrument 10. The directory server 60 may comprise a list of previously declared BINs of issuer authorities (i.e. banks) that support usage of the out-of-band method.

Thanks to some embodiments of the invention, if the selected first method is "PIN verification" (i.e. the payment terminal is supposed to check the PIN code assigned to the payment instrument), the selected first method may be replaced by the out-of-band method to avoid providing the payment terminal with the PIN code typed by the user. Thus, security of user sensitive data is increased compared to conventional user authentication methods.

In the present description, the word 'override' means that the out-of-band method may be performed instead of the first method selected during the first phase (i.e. the first method is not performed).

In some embodiments, the payment terminal may override the result of a previous conventional authentication method selection (as defined by EMV^{®} contact and contactless specifications or other standard) if the payment terminal knows that the issuer authority supports the OOB method and if the transaction is for a high amount payment.

For example, an issuer authority may have issued the payment instrument 10 and the payment transaction may apply for a transaction amount. The selection procedure may comprise two phases. The first phase may lead to the selection of a first method for authenticating the user. The first method may be the Consumer Device Cardholder Verification Method (CD-CVM) where the user is actually authenticated by their own payment instrument (like a mobile phone) by entering biometric data or a secret code on the consumer device that checks the captured biometric data or the entered secret code.

The second phase is executed after the first phase. During the second phase, the payment terminal may compare the transaction amount to a preset threshold 26 and if the transaction amount exceeds the preset threshold 26, the payment terminal may send a request 61 to a directory server 60 to find out if the issuer authority supports the out-of-band method as shown at Figure 4.

The preset threshold 26 may be set to 300 Euros for instance. In the event of a positive response 62 received from the directory server, the payment terminal may make the unilateral decision to override the first method (selected during the first phase) and to select the out-of-band method for authenticating the user. In such a case, the out-of-band method is executed in addition to the previously CD-CVM method already applied for authenticating the user during the first phase. The double check of the user authentication allows increasing the security of the payment transaction.

In some embodiments, the user may select the out-of-band method through a user interface of the payment terminal.

For example, during the payment transaction, the payment terminal 20 may propose to the user to select a user authentication method for the pending payment transaction. This proposal may be based on information provided by the payment instrument that the issuer authority supports OOB method (or alternatively by checking that the ' issuer authority supports the OOB method through the same process as described in previous cases) and information known by the payment terminal that it supports OOB method as well. Then the payment terminal may retrieve an input data from the user via an input interface of the payment terminal, the input data reflecting a choice of the user to authenticate the user by the out-of-band method. Then the payment terminal may finalize the selection procedure by making the decision to select the out-of-band method for authenticating the user based on the input data.

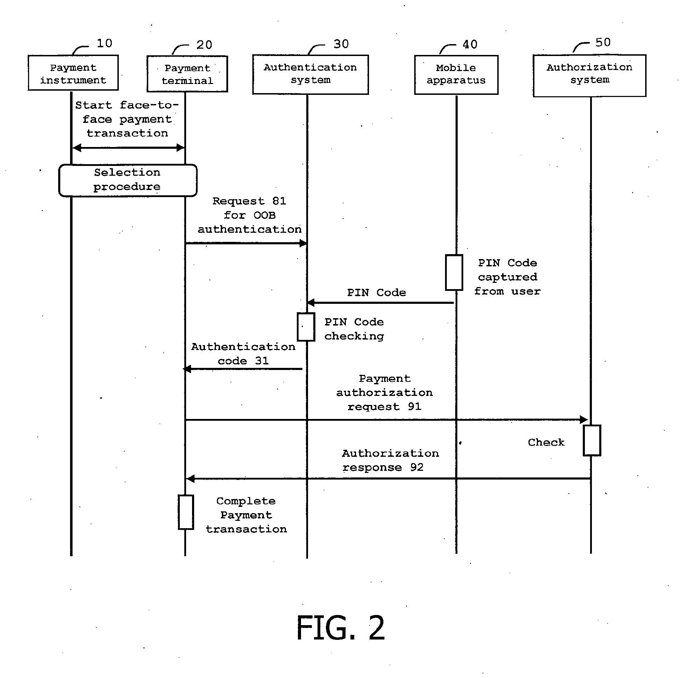

As depicted at Figure 2, in some embodiments, the out-of-band method may require execution of a PIN verification and the authentication system 30 may require the user to enter a PIN code associated to the payment instrument via a user interface of the mobile apparatus 40. Then the mobile apparatus may send the entered PIN code to the authentication system 30 that may perform a validity check of the received PIN code with a reference PIN code associated with the payment instrument and previously stored by an issuer authority in the authentication system 30 or in a dedicated PIN code verification server connected to the authentication system. Then the authentication system may generate the authentication code 31 reflecting a result of the check of the received PIN code.

It is to be noted that in such embodiments, instead of entering the card PIN code on the payment terminal 20 (as is usually the case), the user enters the card PIN code on the mobile apparatus 40.

It is to be noted that in such embodiments, instead of entering an applicative PIN code (specifically assigned to a bank software application hosted on a mobile phone) on the mobile apparatus 40 (as it may happen in conventional usecase), the user enters the card PIN code (specifically assigned to the payment instrument) on the mobile apparatus 40.

In some embodiments, the mobile apparatus may send the entered PIN code to the authentication system 30 via the flow of EMV^{®} 3-D Secure specifications.

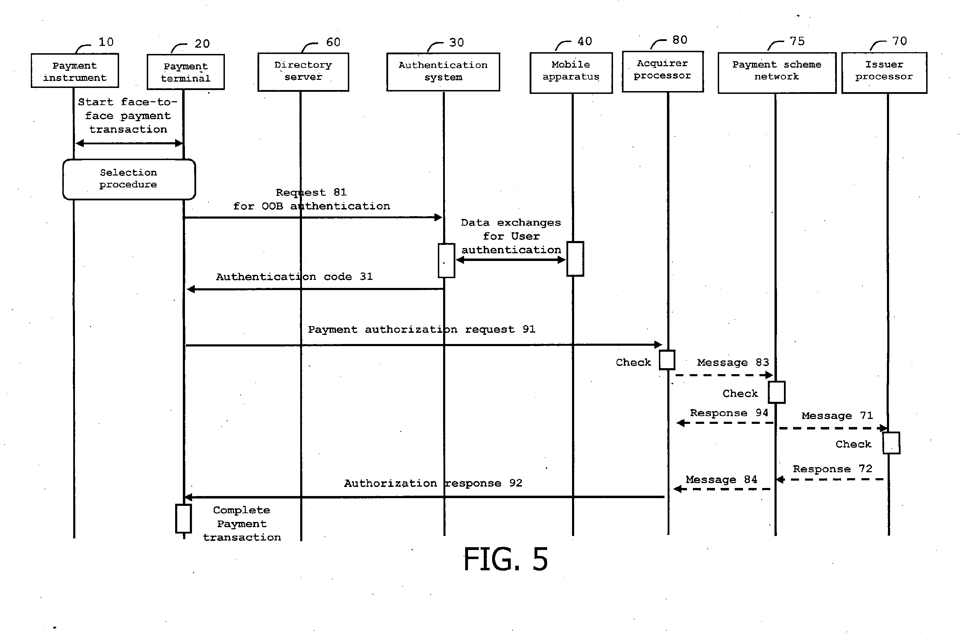

The authorization system 50 (as shown at Figures 1, 2, 3 and 4) may comprise three distinct actors as shown at Figure 5: an acquirer processor 80, a payment scheme network 75, and an issuer processor 70.

The acquirer processor 80 may be able to perform some checks on behalf of the acquirer authority (i.e. the bank of the merchant).

The payment scheme network 75 (switching the transaction between the issuer authority and the acquirer authority) may be able to perform some checks on behalf of the payment scheme. The payment scheme may be Visa^{®}, Mastercard^{®}, GIE Cartes Bancaires^{®}, Girocard^{®} or American Express^{®} for instance.

The issuer processor 70 may be able to perform some checks on behalf of the issuer authority (i.e. the bank of the user) that issued the payment instrument 10 of the user.

As depicted at Figure 5, in some embodiments, the acquirer processor 80 may deny the payment transaction if the payment terminal is of a particular type and the user has not been authenticated using the out-of-band method.

For example, after the selection procedure, the payment terminalmay send to the acquirer processor 80 a payment authorization request 91 intended to comprise both the authentication code 31 (generated as a result of the authentication of the user via the out-of-band method) and a terminal parameter 27 reflecting capabilities of the payment terminal.

If the terminal parameter 27 indicates that the payment terminal is of a specific type and the received authentication code 31 is invalid (or missing), the acquirer processor 80 may generate an authorization response 92 denying the payment transaction then send the authorization response to the payment terminal 20.

In particular, the acquirer processor may generate an authorization response 92 denying the payment transaction if the terminal parameter indicates that the payment terminal is a softPOS (i.e. a commercial off-the-shelf mobile device hosting a Point-Of-Sale terminal software application) or has been certified as having a security level below a target security threshold.

Alternatively, the acquirer processor may forward the payment authorization request 91 (through a message 83) to the payment scheme network 75 if the acquirer processor 80 does not deny the payment transaction.

As depicted at Figure 5, in some embodiments, the payment scheme network 75 may deny the payment transaction if the payment terminal is of a particular type and the user has not been authenticated using the out-of-band method.

For example, the payment scheme network 75 may receive from the acquirer processor 80 a message 83 including the payment authorization request 91 that comprises the authentication code 31 and a terminal parameter 27 reflecting capabilities of the payment terminal 20.

The payment scheme network 75 may make a decision to authorize continuation of the payment transaction by using both the authentication code 31 and the terminal parameter 27. The payment scheme network 75 may generate an authorization response 94 denying the transaction payment if the terminal parameter indicates that the payment terminal is of a specific type and the authentication code is invalid (or missing). The check of the specific type may consist in verifying that the payment terminal is a SoftPOS or has been certified as having a security level below a target security threshold.

The payment scheme network 75 may send the generated authorization response 94 to the acquirer processor 80 that forwards it to the payment terminal through the authorization response 92.

If the payment scheme network 75 does not deny the payment transaction, the payment scheme network 75 may forward the payment authorization request 91 to the issuer processor 70 through a message 71.

As depicted at Figure 5, in some embodiments, the issuer processor 70 may deny the payment transaction if the payment terminal is of a particular type and the user has not been authenticated using the out-of-band method.

For example, the issuer processor 70 may receive from the payment scheme network 75 a message 71 including the payment authorization request 91 that comprises the authentication code 31 and a terminal parameter 27 reflecting capabilities of the payment terminal 20.

The issuer processor 70 may generate an authorization response 72 denying the payment transaction if the terminal parameter indicates that the payment terminal is of a specific type and the authentication code is invalid (or missing). The check of the specific type may consist in verifying that the payment terminal is a SoftPOS or has been certified as having a security level below a target security threshold.

If the issuer processor 70 does not deny the payment transaction, the issuer processor 70 may generate a positive authorization response 72 and send it to the payment terminal 20 via successively the payment scheme network 75 and the acquirer processor 80 (message 84).

It is to be noted that the presence of a valid authentication code 31 (successfully generated by the authentication system 30) in the payment authorization request 91 (or in the message 83 or in the message 71 depending on the embodiments described above) reflects the fact the user has been authenticated by using the out-of-band method.

The embodiments described above may be combined. In particular, all embodiments detailed in relation to Figures 5 and 6, can be advantageously combined (all together or in pairs) to guarantee that one, two or three checks are performed by the authorization system 50 before authorizing the payment terminal to complete the payment transaction.

In some embodiments, the authentication code 31 or the payment authorization request 91 may further comprise a metadata reflecting the way the out-of-band method has been performed and/or the transaction amount. For instance, the metadata may specify that the user entered a PIN code on the mobile apparatus 40 and a remote server of the authentication system 30 has successfully checked the PIN code. Each actor of the authorization system 50 may perform additional checks using the metadata or the transaction amount before authorizing (or denying) the payment transaction.

Figure 3 shows a diagram of architecture of a payment system 85 for authenticating a user 90 of a payment instrument 10 during a face-to-face payment transaction according to an example of the invention.

The payment system 85 comprises a payment terminal 20, a remote authentication system 30, a mobile apparatus 40, a directory server 60 and a payment instrument 10 that is assigned to a user 90.

In the example of Figure 3., the payment instrument 10 is a smart card having a hardware processor and a nonvolatile memory 13. The smart card may comprise an identifier 15 uniquely and permanently allocated to the payment card 10. For instance, the card identifier 15 may be a Primary Account Number (PAN) as defined by ISO/IEC 7812 standard.

The smart card 10 comprises a physical communication interface 12 able to exchange data with the payment terminal 20. Preferably, the communication -interface 12 is a contactless interface.

In some embodiments, the payment instrument 10 may be a passive (or non-connected) wearable (like a payment ring for instance), a digital payment card located within an active and connected wearable (like a smartwatch for instance), or a digital payment card located within a mobile phone.

In some embodiments, the payment instrument may receive a terminal parameter from the payment terminal. A selection rule 11 specifying that the out-of-band method must be selected during the selection procedure if the payment terminal supports the out-of-band method may be stored in the memory 13 of the payment instrument 10. The payment instrument 10 may be configured to finalize the selection procedure by making the unilateral decision to select the out-of-band method for authenticating the user and sending to the payment terminal 20 a message requiring an authentication of the user by the out-of-band method.

The payment instrument 10 and the payment terminal 20 constitute an entity configured to perform a selection procedure that leads to a selection of an out-of-band (OOB) method for authenticating the user, during the payment transaction.

In response to the selection of the out-of-band method, the payment terminal 20 is configured to send to the remote authentication system 30 an authentication request 81 requesting user authentication through the selected out-of-band method.

Upon receipt of the authentication request, the authentication system is configured to attempt to authenticate the user by exchanging data with a mobile apparatus 40 of the user. The mobile apparatus 40 has been previously registered with the authentication system 30.

The authentication system is configured to generate an authentication code 31 reflecting a result of the user authentication attempt and to send the generated authentication code 31 to the payment terminal 20.

The payment terminal is configured to use the received authentication code for requesting an authorization to complete the payment transaction by exchanging messages with an authorization system 50.

In some embodiments, the payment smart card 10 may comprise a list 14 of Cardholder Verification Methods that includes the out-of-band method and the payment terminal 20 may be configured to support a number of Cardholder Verification Methods including the out-of-band method. The entity 73 (made of the card 10 and the terminal 20) may be configured to perform the selection procedure as the conventional selection mechanism defined by EMV^{®} contact and contactless specifications. The payment terminal will finalize the selection procedure.

The payment terminal 20 comprises a hardware processor (not shown), a physical communication interface 22 adapted to exchange data with the payment instrument 10 and a physical communication interface 25 adapted to exchange data with the remote authentication system 30. Preferably, the communication interface 22 is a contactless interface. For instance, the communication interface 22 may be adapted to exchange data through a Near Field Communications (NFC), Wi-Fi (as defined by ISO/CEI 8802-11 standard), Bluetooth Low Energy^{®} (BLE) or Ultra Wideband (UWB) communication session. The payment terminal 20 may be configured to communicate with the authentication system 30 through a combination of wireless and wired networks like a Telecom network and the Internet.

In some embodiments, the payment terminal may comprise a memory 23 storing a terminal parameter 27 that reflects capabilities of the payment terminal. For instance, the terminal parameter 27 may indicate that the payment terminal is a SoftPOS.

In some embodiments, the entity 73 (made of the payment instrument and the payment terminal) may be configured to perform the selection procedure in two phases. The first phase may result in selecting a first method for authenticating the user. Such a first phase may be executed using a conventional method selection procedure. For instance, the implemented selection procedure may comply with EMV^{®} contact and contactless specifications. The second phase is performed after the first phase. During the second phase, the payment terminal may be configured to send a request 61 to a directory server 60 to find out if the issuer authority that issued the payment instrument 10 supports the out-of-band method. The payment terminal may be configured to receive a positive response 62 from the directory server 60, and consequently, to make the unilateral decision to override the first method (selected during the first phase) and to select the out-of-band method for authenticating the user.

Assuming that the payment transaction applies for a transaction amount, in some embodiments, the first method selected during the first phase may be a Consumer Device Cardholder Verification Method (CD-CVM) that is actually applied to the user during the first phase. During the second phase, the payment terminal may be configured to compare the transaction amount to a preset threshold 26. stored in the payment terminal 20. If the transaction amount exceeds the preset threshold 26, the payment terminal may be configured to send a request 61 to the directory server 60 to find out if the issuer authority that issued the payment instrument 10 supports the out-of-band method. The payment terminal 20 may be configured to receive a positive response 62 from the directory server 60, and consequently, to make the unilateral decision to override the first method and to select the out-of-band method for authenticating the user.

In some embodiments, during the payment transaction, the payment terminal 20 may be configured to prompt the user 90 to enter an input data via an input interface (like a button or a touch screen) of the payment terminal. The input data may reflect a choice of the user to authenticate the user by the out-of-band method. The payment terminal 20 may be configured to finalize the selection procedure by making the decision to select the out-of-band method for authenticating the user based on the entered input data.

In some embodiments, the payment terminal may be (or comprise) a Point-Of-Sale terminal software application 24 hosted by a commercial off-the-shelf mobile phone.

In some embodiments, the payment terminal may be a Point-Of-Sale terminal or an Automated Teller Machine (ATM) .

In some embodiments, the out-of-band method may require execution of a verification of a PIN value uniquely assigned to the payment instrument 10. The authentication system may require the user to enter their PIN code associated to the payment instrument via a user interface 41 of the mobile apparatus 40. The mobile apparatus 40 may send the entered PIN code to the authentication system 30 via a communication session that may rely on a combination of wireless (i.e. Wi-Fi or Telecom network) and conventional wired networks. The authentication system may be configured to perform a check of the received PIN code with a reference PIN code associated with the payment instrument and previously stored by the issuer authority in the authentication system 30 or in a PIN code verification server connected to it. The authentication system may be configured to generate the authentication code 31 that reflects a result of the check of the received PIN code.

In some embodiments, the payment system may comprise an acquirer processor 80, which acts on behalf of the bank of the merchant. The payment terminal may be configured to send to the acquirer processor 80 a payment authorization request 91 comprising both the authentication code 31 (previously received from the authentication system 30) and a terminal parameter 27 reflecting capabilities of the payment terminal.

The acquirer processor 80 may be configured to generate an authorization response 92 denying the payment transaction if the terminal parameter indicates that the payment terminal is of a specific type (like a SoftPOS or a low security level terminal for instance) and the received authentication code 31 is invalid (or even missing), then to send the authorization response 92 to the payment terminal 20. The acquirer processor 80 may be configured to forward the payment authorization request 91 to a payment scheme network if the acquirer processor does not deny the payment transaction.

In some embodiments, the payment system may comprise an acquirer processor 80 and a payment scheme network 75. The payment scheme network 75 acts on behalf of a payment scheme as a switch between the bank of the merchant and the bank that issued the payment instrument.

The acquirer processor 80 may be configured to send to the payment scheme network 75 a message 83 comprising the payment authorization request 91 (originating from the payment terminal). The message may comprise the authentication code 31 and a terminal parameter 27 reflecting capabilities of the payment terminal.

The payment scheme network 75 may be configured to generate an authorization response 94 by checking if the payment transaction is authorized by using the authentication code - 31 and a terminal parameter 27 reflecting capabilities of the payment terminal 20. The payment scheme network 75 may be configured to generate an authorization response 94 denying the transaction payment if the terminal parameter indicates that the payment terminal is of a specific type (like SoftPOS for instance) and the authentication code is invalid (or missing). The payment scheme network may be configured to send the authorization response to the acquirer processor 80 that may be configured to forward the authorization response to the payment terminal 20.

In some embodiments, the payment system may comprise an acquirer processor 80, a payment scheme network 75 and an issuer processor 70. The issuer processor 70 acts on behalf of the bank that issued the payment instrument 10.

The payment scheme network 75 may be configured to send to the issuer processor 70 a message 71 based on the payment authorization request 91 (originating from the payment terminal). The message 71 may comprise the authentication code 31 and a terminal parameter 27 reflecting capabilities of the payment terminal.

The issuer processor 70 may be configured to generate an authorization response 72 by checking if the payment transaction is authorized by using the authentication code 31 and a terminal parameter 27 reflecting capabilities of the payment terminal 20. The issuer processor 70 may be configured to generate an authorization response 72 denying the transaction payment if the terminal parameter indicates that the payment terminal is of a specific type (like SoftPOS) and the authentication code 31 is invalid or missing. The issuer processor 70 may be configured to send the authorization response to the payment terminal 20 via successively the payment scheme network 75 and the acquirer processor 80.

Each of the following actors: acquirer processor 80, payment scheme network 75, issuer processor 70, authorization system 50, directory server 60, 3DS server 32, 3DS directory server 33 and authentication system 30 may be implemented as a hardware computer hosting a combination of hardware instructions, firmware, operating system and program instructions adapted to provide (when executed on the hardware processor) all features described above through all the embodiments. Each of the above listed actors have the appropriate physical communication interfaces based on conventional communication networks to exchange data and messages as described in the above embodiments.

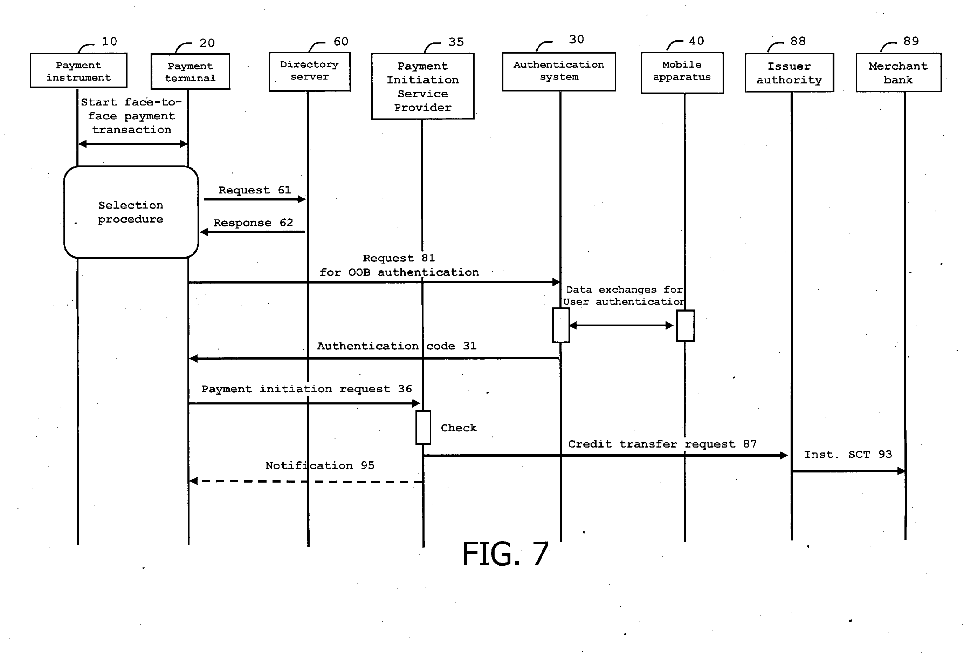

Figure 7 shows an exemplary flow diagram for authenticating a user of a payment instrument during a credit-transfer-based transaction.

A credit-transfer-based transaction is a transaction initiated by a Payment Initiation Service Provider (PISP) 35. The revised Payment Services Directive (PSD2) issued by the European Parliament and the council of the European Union describes the credit-transfer-based transaction based on PISP. It consists in initiating, through the PISP, a credit transfer between the bank of the user (the payer) and the bank of the merchant (the payee).

A bank of the user (also known as issuer authority) may have issued the payment instrument 10 assigned to a user account (i.e. the bank account of the user of the payment instrument). The payment terminal 20 may send a request 61 to a directory server 60 to find out if the bank of the user supports the out-of-band method as shown at Figure 7. In the event of a positive response 62 received from directory server, the payment terminal 20 may make the unilateral decision to select the out-of-band method for authenticating the user.

In some embodiments, the directory server 60 may be compliant with the EMV^{®} 3-D Secure specifications.

In some embodiments, the request 61 may comprise at least a part of the payment instrument identifier retrieved by the payment terminal. For instance, the payment terminal may extract the International Bank Account Number (IBAN) read in the payment instrument before or during the selection procedure.

The payment terminal 20 may generate a request 61 comprising the IBAN retrieved from the payment instrument 10. The directory server 60 may comprise a list of previously declared IBANs of issuer authorities (i.e. banks of the user) that support usage of the out-of-band method.

Responsive to the selection of the out-of-band method, the payment terminal sends to a remote authentication system 30 an authentication request 81 for requesting user authentication through the selected out-of-band method.

Upon receipt of the authentication request 81, the authentication system attempts to authenticate the user by exchanging data with a mobile apparatus 40 of the user.

Then the authentication system 30 generates an authentication code 31 that reflects a result of the user authentication attempt via the OOB method and that signs the transaction amount.

The authentication code 31 may comprise metadata identifying the used method for user authentication.

The authentication system 30 may notify the payment terminal with the generated authentication code 31 so that the payment terminal may display a message accordingly to the user.

Then the payment terminal sends a payment initiation request 36 comprising both the authentication code 31 and terminal parameter 27 to the PISP 35. In turn, the PISP executes checks based on the received authentication code 31 and terminal parameter 27. If the PISP 35 accepts the authentication for the transaction amount, it may send a credit transfer request 87 to the issuer authority 88 which in turn may send an instant SEPA Credit Transfer (Inst. SCT) or an instant bank transfer order 93 to the merchant bank 89 to transfer the relevant amount from the customer account to the merchant account.

Alternatively, the issuer authority 88 may send a traditional SEPA Credit Transfer (SCT) or bank transfer order to the merchant bank 89.

In some embodiments, the PISP 35 may send a notification 95 of money transfer to the payment terminal 20.

The invention is not limited to the described embodiments or examples. In particular, the described examples and embodiments may be combined.

The invention is not limited to Banking smart cards and applies to any payment instruments able to participate to a payment transaction like digital cards for instance. It may apply to zero-amount transactions, in which case the payment instrument can be considered as an authentication instrument.

Thanks to some embodiments of the invention, during a proximity (i.e. face-to-face) payment transaction performed on SoftPOS, the cardholder verification is displaced from the merchant payment terminal (through e.g. PIN entry) to the cardholder's own mobile device. Thus, a hacked or fake payment terminal cannot get the value of the PIN code or the secret value entered by the user during the cardholder verification.

Although some embodiments of the invention are well suited for increasing security of transaction carried out via SoftPOS terminals, they can be used on any type of payment terminal.

Some embodiments of the invention solve the apprehension that a cardholder may experience when being requested to enter their PIN code on a merchant SoftPOS terminal, which looks like a standard mobile device.

Thanks to some embodiments of the invention, the duration of the whole payment transaction is reasonable for the user. In particular, use of the 3DS flow is deemed acceptable to the user.

Thanks to some embodiments of the invention, both the acquirer processor, the payment scheme network and the issuer processor may control (authorize or deny) the progress of the payment transaction.

Some embodiments of the invention eliminate the risk of a fraudulent transactions initiated by a fake SoftPOS terminal, which is connected to a genuine POS terminal and where the amount of the transaction is changed by the fake SoftPOS terminal (known as man-in-the-middle attack). Indeed the amount of the transaction is presented to the cardholder during the out-of-band authentication. The cardholder can thus detect any modification of the amount through a man-in-the-middle attack.

It can be even seamless for the end-user with risk-based authentication mechanisms as proposed in the v2 of EMV^{®} 3-D Secure. Risk-based authentication means that the payment scheme or the issuer will score the risk of the transaction using parameters as defined in EMV^{®} 3-D Secure. If the risk is considered low, the issuer can decide to not ask for authentication (no step-up authentication). The capability to implement this kind of feature will depend on what the regulation authorizes or not, but in principle, an issuer could decide not to perform an authentication for a high-amount transaction. Parameters that can be used to score the transaction risk include for example geolocation parameters: if SoftPOS geolocation and payment device (considering it is a mobile phone) geolocation are different, then the transaction will be considered risky. Ultimately, the introduction of this new out-of-band authentication method can help reducing the need for authentication for a face-to-face EMV^{®} payment transaction.

## Claims

1. A method for authenticating a user (90) of a payment instrument (10) during a face-to-face payment transaction between said payment instrument and a payment terminal (20),
wherein, during the payment transaction, an entity consisting of the payment instrument and the payment terminal performs a selection procedure which leads to a selection of an out-of-band method for authenticating the user,
wherein, responsive to the selection of the out-of-band method, the payment terminal sends to a remote authentication system (30) an authentication request (81) for user authentication through said out-of-band method,
wherein, upon receipt of the authentication request, the authentication system attempts to authenticate the user by exchanging data with a mobile apparatus (40) of the user previously registered with the authentication system,
wherein the authentication system generates an authentication code (31) reflecting a result of the user authentication attempt and sends said authentication code to the payment terminal (20), and
wherein the payment terminal uses the authentication code for requesting either a payment authorization or a payment initiation to complete the payment transaction.

2. The method according to claim 1, wherein the payment instrument comprises a list (14) of Cardholder Verification Methods including said out-of-band method, wherein the payment terminal supports a number of Cardholder Verification Methods including said out-of-band method, and wherein said selection procedure is the conventional selection mechanism as defined by EMV^{®} contact and contactless specifications and is finalized by the payment terminal.

3. The method according to claim 1, wherein the payment terminal stores a terminal parameter (27) reflecting capabilities of the payment terminal, wherein during the payment transaction, the payment instrument receives from the payment terminal said terminal parameter, wherein the payment instrument comprises a selection rule (11) specifying that the out-of-band method must be selected if the payment terminal supports said out-of-band method, wherein the selection procedure is finalized by the payment instrument which takes the unilateral decision to select the out-of-band method for authenticating the user, and wherein the payment instrument sends to the payment terminal a message requiring an authentication of the user by the out-of-band method.

4. The method according to claim 1, wherein the payment instrument has been issued by an issuer authority, wherein said selection procedure comprises a first phase which leads to the selection of a'first method for authenticating the user, and wherein said selection procedure comprises a second phase subsequent to the first phase in which the payment terminal sends a request (61) to a directory server (60) to find out if the issuer authority supports the out-of-band method, and in the event of a positive response (62) received from the directory server, the payment terminal makes the unilateral decision.to override said first method and to select the out-of-band method for authenticating the user.

5. The method according to claim 4, wherein the payment transaction applies for a transaction amount, wherein said first method is a Consumer device Cardholder Verification method (CD-CVM) actually applied to the user during the first phase, wherein during said second phase the payment terminal compares the transaction amount to a preset threshold (26) and if the transaction amount exceeds the preset threshold the payment terminal sends the request (61) to the directory server (60) to find out if the issuer authority supports the out-of-band method, and in the event of a positive response (62) received from the directory server, the payment terminal makes the unilateral decision to override said first method and to select the out-of-band method for authenticating the user.

6. The method according to claim 1, wherein during the payment transaction, the payment terminal retrieves an input data from the user via an input interface of the payment terminal, said input data reflecting a choice of the user to authenticate the user by the out-of-band method and wherein the selection procedure is finalized by the payment terminal which makes the decision to select the out-of-band method for authenticating the user based on said input data.

7. The method according to claim 1, wherein the out-of-band method requires execution of a PIN verification, wherein said authentication system requires the user to enter a PIN code associated to the payment instrument via a user interface of the mobile apparatus (40), wherein the mobile apparatus sends the entered PIN code to the authentication system (30), wherein the authentication system performs a check of the received PIN code with a reference PIN code associated with the payment instrument and stored by an issuer authority, and wherein the authentication system generates the authentication code (31) reflecting a result of the check of the PIN code.

8. The method according to claim 1, wherein the payment terminal sends to an acquirer processor (80) a payment authorization request (91) comprising the authentication code (31) and a terminal parameter (27) reflecting capabilities of the payment terminal,
wherein the acquirer processor generates an authorization response (92) denying the payment transaction if the terminal parameter indicates that the payment terminal is of a specific type and the received authentication code (31) is invalid or missing, then sends the authorization response to the payment terminal,
and wherein the acquirer processor forwards the payment authorization request (91) to a payment scheme network (75) if the acquirer processor does not deny the payment transaction.

9. The method according to claim 1, wherein an acquirer processor (80) sends to a payment scheme network (75) a message (83) comprising a payment authorization request (91) comprising the authentication code and a terminal parameter (27) reflecting capabilities of the payment terminal,
wherein the payment scheme network generates an authorization response (94) by checking if the payment transaction is authorized to continue by using the authentication code, said payment scheme network generating an authorization response (94) denying the transaction payment if the terminal parameter indicates that the payment terminal is of a specific type and the authentication code is invalid or missing, and
wherein the payment scheme network sends the authorization response to the acquirer processor which forwards the authorization response to the payment terminal.

10. The method according to claim 1, wherein a payment scheme network (75) sends to an issuer processor (70) , working on behalf of an issuer authority that issued the payment instrument (10) of the user, a message (71) comprising a payment authorization request (91) comprising the authentication code and a terminal parameter (27) reflecting capabilities of the payment terminal,
wherein the issuer processor generates an authorization response (72) by checking if the payment transaction is authorized by using the authentication code, said issuer processor generating an authorization response (72) denying the transaction payment if the terminal parameter indicates that the payment terminal is of a specific type and the authentication code is invalid or missing, and
wherein the issuer processor sends the authorization response to the payment terminal via successively the payment scheme network then the acquirer processor.

11. The method according to claim 1, wherein the payment terminal sends to a Payment Initiation Service Provider (35) a payment initiation request (36) comprising the authentication code (31) and a terminal parameter (27) reflecting capabilities of the payment terminal,
wherein the Payment Initiation Service Provider executes checks based on the received authentication code and terminal parameter, if the Payment Initiation Service Provider accepts the authentication for the transaction amount, the Payment Initiation Service Provider sends a credit transfer request (87) to the issuer authority (88), which in turn sends a bank transfer order (93) to the merchant bank (89) to transfer the relevant amount from the customer account to the merchant account, and
wherein the Payment Initiation Service Provider sends a notification (95) of money transfer to the payment terminal.

12. The method according to claim 1, wherein the authentication system is compliant with the EMV^{®} 3-D Secure specifications.

13. A payment system (85) comprising a payment terminal (20), a remote authentication system (30) , a mobile apparatus 40, a directory server 60 and a payment instrument (10) assigned to a user (90), the payment instrument being able to contribute to a face-to-face payment transaction with the payment terminal,
wherein, during the payment transaction, an entity (73) consisting of the payment instrument and the payment terminal performs a selection procedure which leads to a selection of an out-of-band method for authenticating the user,
wherein, responsive to the selection of the out-of-band method, the payment terminal is configured to send to the remote authentication system (30) an authentication request (81) for user authentication through said out-of-band method,
wherein, upon receipt of the authentication request, the authentication system is configured to attempt to authenticate the user by exchanging data with a mobile apparatus (40) of the user previously registered with the authentication system,
wherein the authentication system is configured to generate an authentication code (31) reflecting a result of the user authentication attempt and to send said authentication code'to the payment terminal (20), and
wherein the payment terminal is configured to use the authentication code for requesting either a payment authorization or a payment initiation to complete the payment transaction.

14. The payment system according to claim 13, wherein the payment instrument comprises a list (14) of Cardholder Verification Methods including said out-of-band method, wherein the payment terminal supports a number of Cardholder Verification Methods including said out-of-band method, wherein said selection procedure is the conventional selection mechanism as defined by EMV^{®} contact and contactless specifications and wherein the payment terminal is configured to finalize the selection procedure.
